# EUROPEAN PATENT APPLICATION

(11) **EP 4 807 574 A1**
(43) Date of publication of application: **16.09.2026**
(21) Application number: 26164567.5
(22) Date of filing: 13.03.2026
(51) Int. Cl.: G06F 15/177

(54) **TRAY WITH CONFIGURABLE DOMAINS AND ON-TRAY COMMUNICATION BRIDGE**

(30) Priority: 14.03.2025 US 202519080012
(71) Applicant: Nvidia Corporation, Santa Clara, CA 95051 (US)
(72) Inventor: MENTOVICH, Elad, Santa Clara, 95051 (US); ALBRIGHT, Ryan, Santa Clara, 95051 (US); NORTON, John, Santa Clara, 95051 (US); HERRING, David, Santa Clara, 95051 (US); HAND, Sam, Santa Clara, 95051 (US); LANING, Ray, Santa Clara, 95051 (US)
(74) Representative: Mathys & Squire

(57) **Abstract**

According to an aspect of the present disclosure, a tray is provided that includes a plurality of groups of processing units. Each group of processing units includes one or more processing units in communication with one another. In certain embodiments, communication between pairs of groups of processing units is enabled by an on-tray communication bridge. Each of the one or more processing units are one of a CPU, GPU, DPU, QPU, PPU and/or the like.

## Description

### BACKGROUND

As artificial intelligence and/or machine learning use increases, the amount of information being processed by datacenters and communicated between large clusters of computing resources (e.g., graphical processing units (GPUs), central processing units (CPUs), data processing units (DPUs), and/or the like) is also increasing. Various datacenter topologies are better suited for different datacenter tasks. For example, some tasks, such as model training, may be completed more efficiently by a small number of larger L1 domains while other tasks, such as inference applications, may be completed more efficiently by a large number of smaller L1 domains. However, conventional datacenters provide very little flexibility or configurability in the size of L1 domains of the datacenters. Therefore, there is a need in the art for datacenter components, such as trays, links/communication bridges, and/or the like that enable flexible and/or configurable definition of L1 domains within a datacenter.

### GENERAL DESCRIPTION

The invention is defined by the claims. In order to illustrate the invention, aspects and embodiments which may or may not fall within the scope of the claims are described herein.

Datacenters often include a plurality of L1 domains (e.g., individual servers) that are in communication with respective L2 domains or aggregation layers. For example, an L1 domain is a plurality of compute nodes, processing units, and/or compute elements that are either directly connected (e.g., via NVlink infrastructure, for example) or via one layer of switches. An L2 domain is a domain where elements of the domain are connected through two layers of switches. For example, an L2 domain may aggregate traffic from a plurality of L1 domains to perform functions such as load balancing. Some datacenters may also include an L3 domain configured to route traffic between various L2 domains and communicate with networks external to the data center.

An L1 domain may include a one or more processing units, such as graphical processing units (GPUs), central processing units (CPUs), data processing units (DPUs), parallel processing units (PPUs), quantum processing units (QPUs), and/or the like. These processing units are often housed on trays that are mounted within server racks. Conventionally, a server rack may house a plurality of trays that each host a plurality of processing units (e.g., GPUs, CPUs, DPUs, PPUs, QPUs, and/or the like) and trays that host switches, such as a top-of-rack switch configured to communicate with the L2 domain (e.g., via switch fabric).

In at least one example embodiment, a datacenter corresponds to a collection of network devices, such as network switches (e.g., Ethernet switches, IP routers, multiservice platforms, various transmission network elements, legacy communication equipment, or in any other suitable communication system) connected with a collection of L1 domains such as servers or compute nodes. A switch fabric serves to transfer the data between the switch ports. A switch fabric comprises one or more interconnect circuits, which may be arranged in various switch fabric architectures, e.g., m*m crossbar, Banyan, Benes, Omega, Clos, multi-plane, STS, TST, shared memory, buffered crossbar, any other suitable blocking or non-blocking architecture, or any applicable mixed architecture thereof. A switch fabric is realized in typical embodiments by hardware, which may comprise Field-Programmable Gate Arrays (FPGAs) and/or Application-Specific Integrated Circuits (ASICs), and in some implementations also bus interconnects. The datacenter may adhere to a networking topology (e.g., a hierarchal networking topology), such as a fat tree topology, a Slim Fly topology, a Dragonfly topology, and/or the like. The datacenter routes traffic amongst the network switches and L1 domains (e.g., servers, compute nodes, and/or the like) therein, and at least one layer of the topology in the datacenter is coupled to the communication network to allow networking traffic to flow between the datacenter and the network device(s). In some embodiments, the use of smaller (e.g., single node, dual node, and/or the like) L1 domains (e.g., NVlink domains) may reduce and/or even eliminate the need to use switches in the datacenter. For example, computing nodes and/or groups of processing units of an L1 domain may be directly connected to one another via NVlinks such that the need for switches to perform communication functions between various computing nodes and/or groups of processing units is reduced or eliminated.

A "node" as described herein may refer to a network switch to which a plurality of computer processing units (CPUs), graphical processing units (GPUs), data processing units (DPUs), parallel processing units (PPUs), quantum processing units (QPUs), and/or memory media are connected in an arbitrary number. The network switch may communicate with other network switches of the same kind to which the same processing and memory units may be connected. However, in other implementations, "node" may also refer to a processor which may be responsible for communication with all other nodes in the network or subnetwork.

QPUs are configured to perform one or more operations associated with a quantum algorithm. In some embodiments, each of the one or more QPUs may include a plurality of qubits and the one or more QPUs may be in communication with each other via a quantum channel. In some embodiments, each of the plurality of qubits may include local qubits, global qubits, and/or synchronization qubits. In some embodiments, the local qubits of each QPU may be configured to perform the one or more operations associated with the quantum algorithm on the QPU that the local qubits are associated with.

An "optical fiber" as described herein can refer to a single optical fiber (e.g., including a core and a cladding) to provide unidirectional optical communication, can refer to a bidirectional pair of optical fibers (e.g., each including a core and a cladding) to provide both transmit and receive communications in an optical network, or can refer to a multicore fiber, such that a single cladding could encapsulate a plurality of single-mode cores. Optical fibers can extend contiguously and uninterrupted between node or send/receive pairs (e.g., via pass-through connections) or include two or more fibers connected via fiber-to-fiber connections such that the fibers function or perform as a single fiber.

Silicon Photonics (SiP) is a technology that enables optical systems to be manufactured using silicon processes with silicon as the optical medium. Various optical components, such as interconnects and signal processing components, may be fabricated and integrated in a single SiP device. Some SiP devices are fabricated on a silica substrate or over a silica layer on a silicon substrate, a technology that is often referred to as Silicon on Insulator (SOI). In certain optical systems, a SiP device is attached to an external device to facilitate optical communications. However, it is generally difficult to accurately align light signals on the SiP with an external device that receives the light.

In certain optical systems, a SiP device is attached to an external device to facilitate optical communications. For example, the system includes one or more waveguides that carry light signals to and/or from optical chips. Examples of optical chips that can be included on the device include, but are not limited to, one or more components selected from a group consisting of facets through which light signals can enter and/or exit a waveguide, entry/exit ports through which light signals can enter and/or exit a waveguide from above or below the device, multiplexers for combining multiple light signals onto a single waveguide, demultiplexers for separating multiple light signals such that different light signals are received on different waveguides, optical couplers, optical switches, lasers that act as a source of a light signal, amplifiers for amplifying the intensity of a light signal, attenuators for attenuating the intensity of a light signal, modulators for modulating a signal onto a light signal, modulators that convert a light signal to an electrical signal, and vias that provide an optical pathway for a light signal traveling through the device. Additionally, the device can optionally, include electrical components. For instance, the device can include electrical connections for applying a potential or current to a waveguide, controlling active optical components, such as modulators, for example, and/or for controlling other components on the optical device.

According to an aspect of the present disclosure, a tray is provided. For example, the tray may be configured to be mounted within a server rack as part of a datacenter. In an example embodiment, the tray includes processing circuitry configured as a plurality of individual units; and an on-tray communication bridge configured to provide communication links between the respective plurality of individual units such that the individual units may be operated independently of one another or in select groups.

In an example embodiment, the tray further includes a plurality of cartridge connectors. Each cartridge connector is configured to enable communication with a respective individual unit of the plurality of individual units and the tray is configured such that when the tray is mounted in a rack, each of the plurality of cartridge connectors are in communication with a cable cartridge of the rack.

In an example embodiment, the on-tray communication bridge is configured to control communication between the plurality of individual units to provide a configurable and adaptable number of L1 domains on the tray.

According to another aspect, a tray is provided. For example, the tray may be configured to be mounted within a server rack as part of a datacenter. In an example embodiment, the tray includes a plurality of groups of processing units. Each group of processing units includes one or more processing units in communication with one another.

In an example embodiment, communication between pairs of groups of processing units is enabled or prevented by an on-tray communication bridge.

In an example embodiment, each of the one or more processing units are one of a CPU, GPU, DPU, QPU, or PPU.

In an example embodiment, the tray further includes a plurality of cartridge connectors (between the trays or within the trays), wherein each of the plurality of groups of processing units is in communication with a respective cartridge connector of the plurality of cartridge connectors. The external facing rear bridge connections enables the flexibility on the tray enabling the leveraging EIA common trays between ecosystems.

In at least one embodiment, high heat density computing components, server trays or boxes, and racks support artificial intelligence (AI)/machine learning (ML) computing using GPUs, CPUs, switches, storage, and other computing components. In at least one embodiment, a standard datacenter rack (on the outside structure) may be the rack form-factor reservoir. In at least one embodiment, a 40U, 42U, 48U, 50U, or 52U rack (under Electronic Industries Alliance (EIA) standards for racks) may be fitted with a tank of fluid and the associated features for enabling the rack to serve as both, a reservoir to address requirements of thermal equilibrium in at least the secondary cooling loop and a supply of cooling fluid in the event of a failure in the primary or the secondary cooling loops.

In an example embodiment, the tray further includes an on-tray communication bridge configured to provide communication links between respective groups of processing units by interfacing with the plurality of cartridge connectors.

In an example embodiment, the on-tray communication bridge is one of a cabled communication bridge interfacing with the plurality of cartridge connectors or a printed circuit board (PCB)-based communication bridge interfacing with the plurality of cartridge connectors.

In an example embodiment, the plurality of groups of processing units may be selectively in communication with one another via an on-tray communication bridge configured to provide communication links between respective groups of processing units.

In an example embodiment, the on-tray communication bridge is configured to cause a selected one of (a) each group of processing units to be a separate L1 domain, (b) subsets of the groups of processing units of the plurality of groups of processing units to form separate L1 domains, or (c) the plurality of groups of processing units to be part of a common L1 domain.

In an example embodiment, the on-tray communication bridge has a configurable communication topology and is configured to enable dynamic assignment of groups of the plurality of groups of processing units to the L1 domains.

In an example embodiment, the on-tray communication bridge has a fixed communication topology and is pluggably in communication with the plurality of groups of processing units. For example, the communication topology of the tray (e.g., whether the tray comprises one L1 domain, two or more L1 domains that each include two or more groups of processing units, a plurality of L1 domains that each include individual groups of processing units, and/or the like) may be changed by removing the on-tray communication bridge and plugging a different on-tray communication bridge onto the tray and/or cartridge connectors.

In an example embodiment, the on-tray communication bridge is a cabled communication bridge.

In an example embodiment, the on-tray communication bridge is formed on a printed circuit board (PCB).

In an example embodiment, the on-tray communication bridge is an NVLink bridge.

In an example embodiment, the on-tray communication bridge is pluggably connected to the tray.

According to another aspect, a datacenter is provided. In an example embodiment, the datacenter includes at least one tray comprising a configurable number of L1 domains. Each L1 domain of the configurable number of L1 domains includes at least one processing unit of the at least one tray.

In an example embodiment, the tray comprises a plurality of processing units, wherein the plurality of processing units are in groups of processing units with one or more processing units of a group of processing units being in direct communication with one another.

In an example embodiment, the at least one tray comprises an on-tray communication bridge and communication between groups of processing units is controlled by the on-tray communication bridge.

In an example embodiment, the on-tray communication bridge defines the configurable number of L1 domains of the tray.

According to an aspect of the present disclosure, a tray is provided that includes a plurality of groups of processing units. Each group of processing units includes one or more processing units in communication with one another. In certain embodiments, communication between pairs of groups of processing units is enabled by an on-tray communication bridge. Each of the one or more processing units are one of a CPU, GPU, DPU, QPU, PPU and/or the like.

Any feature of one aspect or embodiment may be applied to other aspects or embodiments, in any appropriate combination. In particular, any feature of a method aspect or embodiment may be applied to an apparatus aspect or embodiment, and vice versa.

### BRIEF DESCRIPTION OF THE SEVERAL VIEWS OF THE DRAWINGS

Reference will now be made to the accompanying drawings, which are not necessarily drawn to scale, and wherein:
Figure 1 provides a schematic top view of an example tray, in accordance with certain embodiments;
Figure 2 provides a perspective view of a portion of an example tray, in accordance with certain embodiments;
Figure 3 provides a partial cross-sectional view of an example tray, in accordance with certain embodiments;
Figure 4 provides a schematic illustration of an example datacenter including at least one tray mounted within a server rack, according to certain embodiments;
Figure 5 provides a block diagram of an example system that may include a datacenter and/or one or more trays according to certain embodiments;
Figure 6 provides a schematic diagram of an example datacenter that may include one or more trays according to certain embodiments;
Figures 7A and 7B provide block diagrams of inference and/or training logic used to perform inferencing and/or training operations associated with one or more embodiments;
Figure 8 provides a block diagram that schematically illustrates a computing system that may include one or more trays of various embodiments;
Figure 9 illustrates an example computing environment that may include one or more trays, in accordance with at least one embodiment; and
Figure 10 illustrates another example computer system that may include one or more trays, according to at least one embodiment.

### DETAILED DESCRIPTION

The present disclosure more fully describes various embodiments with reference to the accompanying drawings. It should be understood that some, but not all embodiments are shown and described herein. Indeed, the embodiments may take many different forms, and accordingly this disclosure should not be construed as limited to the embodiments set forth herein. Rather, these embodiments are provided so that this disclosure will satisfy applicable legal requirements. Like numbers refer to like elements throughout.

Various embodiments provide trays having configurable L1 domains. For example, one, two, or a plurality of L1 domains may be defined from groups of processing units hosted by a tray by controlling communication between groups of processing units hosted by the tray via an on-tray communication bridge. In some embodiments, the communication bridge is a cabled communication bridge that may be packaged into a simple sheet metal box. Various embodiments provide datacenters that include at least one tray having configurable L1 domains.

Various datacenter topologies are better suited for different datacenter tasks. For example, some tasks, such as model training, may be completed more efficiently by a small number of larger L1 domains while other tasks, such as inference applications, may be completed more efficiently by a large number of smaller L1 domains. However, conventional datacenters and trays provide very little flexibility or configurability in the size of L1 domains of the datacenters. For example, each compute tray in a server rack may be part of a single L1 domain (e.g. single node or single tray) or each compute tray in the server rack may be its own L1 domain. However, each tray hosts at most one L1 domain. Moreover, the L1 domains are generally not configurable. Thus, in some scenarios, the topology or architecture of a datacenter may be optimized to perform a particular type of task, but may be inefficient at performing other types of tasks. In other scenarios, the topology or architecture of a datacenter may be configured to perform multiple types of tasks semi-efficiently, but not optimized for any of them. As a result, the power consumption of datacenters may be higher than necessary. Therefore, technical problems exist regarding how to optimize datacenter topology and/or architecture for efficient performance of various types of tasks.

Various embodiments provide technical solutions to these technical problems. In various embodiments, single tray or multiple trays having configurable L1 domains are provided. For example, a tray may include processing circuitry configured as a plurality of individual units of processing circuitry. For example, the processing circuitry may be configured as a plurality of individual units each comprising one or more CPUs, GPUs, PPUs, DPUs, QPUs, and/or other processing units. The tray may further include an on-tray communication bridge configured to provide communication links between the respective plurality of individual units such that the individual units may be operated individually or in select groupings.

For example, a tray may include four groups of GPUs and the on-tray communication bridge may be configured to provide communication links between the respective plurality of groups of GPUs such that the tray may host a single L1 domain (e.g. single node) include all four groups of GPUs, two L1 domains that each include two groups of GPUS (dual nodes), two L1 domains where one includes three groups of GPUs and one includes one group of GPUs, three L1 domains where one includes two groups of GPUs and the other two L1 domains each include one group of GPUs, or four L1 domains where each L1 domain includes a single group of GPUs (four nodes) that enables a tray to be divided into four units that may be used independently (e.g., as 4 L1 domains or nodes) or collectively (e.g., as 2 L1 domains/nodes or as 1 L1 domain/node). A domain of four may be created within the tray itself.

In various embodiments, the communication links provided by the on-tray communication bridge are configurable. For example, a switch (e.g., top-of-rack switch) or L2 domain component associated with the tray cause the topology of the communication links provided by the on-tray communication bridge to change dynamically. For example, for one job performed by the datacenter, the groups of processing units of the tray may be used as a single L1 domain and then for a next job performed by the datacenter, the groups of processing units of the tray may be used as individual L1 domains.

Thus various embodiments provide technical improvements to the fields of compute trays, datacenters, and/or related fields.

### Example Trays with Configurable L1 Domains

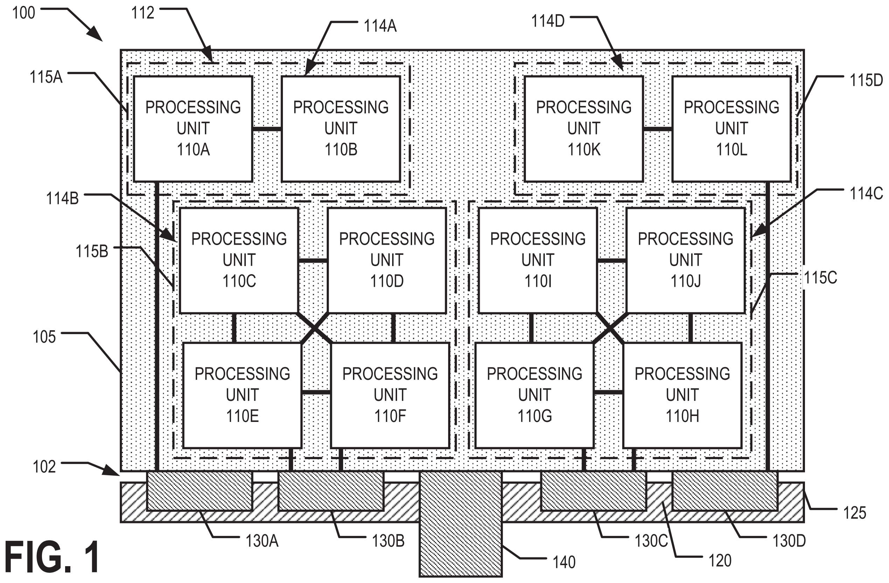

Figure 1 provides a schematic top view of an example tray 100. The tray 100 includes processing circuitry 112 that is organized into a plurality of individual units of processing circuitry 114 (e.g., 114A-114D). The tray 100 also includes an on-tray communication bridge 120 configured to provide communication links between selected pairs of individual units of processing circuitry 114. For example, each individual unit of processing circuitry 114 may be configured to be operated as an individual L1 domain or may be combined with other individual units of processing circuitry hosted by the tray 100 to provide a larger L1 domain (e.g. 36 GPU L1). The combining of a selected pair of individual units of processing circuitry 114 is accomplished via communication links between the selected pair of individual units of processing circuitry 114 provided by the on-tray communication bridge 120. For example, the on-tray communication bridge 120 may be configured to control communication between the plurality of individual units of processing circuitry 114 to provide a configurable number of L1 domains on the tray 100.

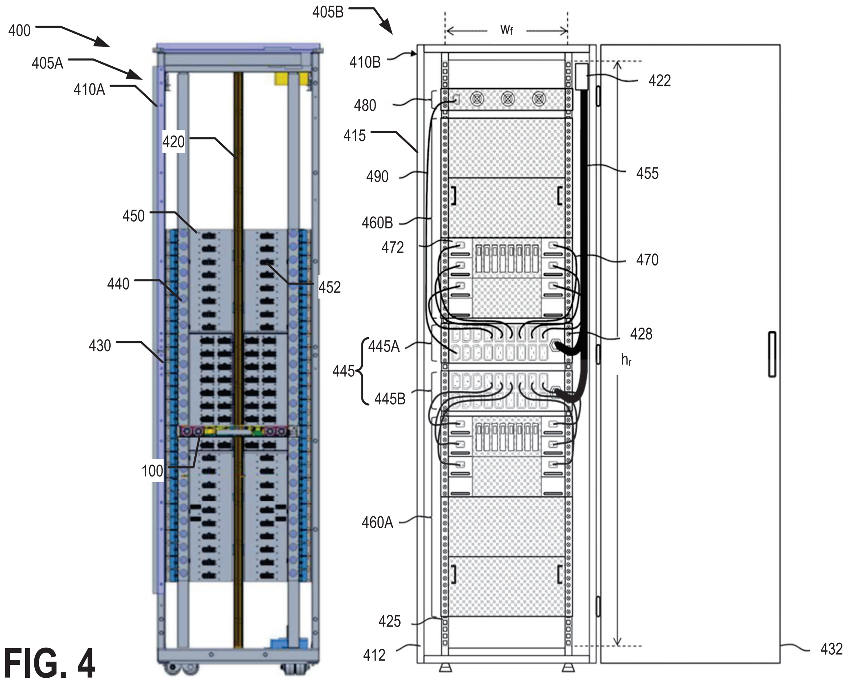

In various embodiments, the tray 100 further comprises a plurality of cartridge connectors 130 (e.g., 130A-130D). Each cartridge connector is in wired and/or cabled communication with a respective individual unit of processing circuitry 114. The cartridge connectors 130 are configured such that, when the tray 100 is mounted within a rack 405, as shown in rack 405A illustrated in Figure 4, the cartridge connectors 130 of the tray are mated with corresponding cartridge connectors 452 of a cable cartridge 450 of the rack 405. The cable cartridge 450 may be mounted to rail assemblies 410 (e.g., 410A, 410B) with brackets independent of the rack 405 (e.g., 405A, 405B), in certain embodiments. For example, the cartridge connectors 130 of the tray 100 are configured to place each individual unit of processing circuitry 114 independently into communication with the cable cartridge 450. In certain embodiments, the tray 100 further comprises a busbar connector 140 configured to be placed into electrical communication with the busbar 420 of the rack 405 when the tray is mounted within the rack so as to provide electrical power to the processing circuitry 112 hosted by the tray 100.

In certain embodiments, the on-tray communication bridge 120 is configured to interface with the cartridge connectors. For example, the on-tray communication bridge 120 may be configured to provide a communication link between a first individual unit of processing circuitry 114A and a second individual unit of processing circuitry 114B via a first cartridge connector 130A in cabled and/or wired communication with the first individual unit of processing circuitry 114A and a second cartridge connector 130B in cabled and/or wired communication with the second individual unit of processing circuitry 114B.

Other than the on-tray communication bridge 120, the tray 100 does not accommodate communication between different individual units of processing circuitry 114. For example, when the on-tray communication bridge 120 provides a communication link between a first individual unit of processing circuitry 114A and a second individual unit of processing circuitry 114B, that communication link is the only avenue for direct communication between the first individual unit of processing circuitry 114A and the second individual unit of processing circuitry 114B. When the on-tray communication bridge 120 does not provide a communication link between a first individual unit of processing circuitry 114A and a second individual of processing circuitry 114B, no means for direct communication between the first individual unit of processing circuitry 114A and the second individual unit of processing circuitry 114B exists.

As shown in Figure 1, the processing circuitry 112 comprises a plurality of processing units 110 (e.g., 110A-110L). In various embodiments, the plurality of processing units 110 hosted by a tray may include one or more of CPUs, PPUs, GPUs, DPUs, QPUs, and/or other processing units. The plurality of processing units 110 are organized and/or configured as a plurality of groups 115 (e.g., 115A-115D). For example, an individual unit of processing circuitry 114 is a group 115 of processing units 110, in various embodiments.

Each of the processing units 110 in a group 115 of processing units 110 are in direct communication with the other processing units 110 in the group 115 of processing units 110. For example, a first processing unit 110A and a second processing unit 110B form a first group 115A of processing units and the first processing unit 110A and the second processing unit 110B are in direct wired, cabled, and/or PCB-based communication with one another. In other example, a third processing unit 110C, fourth processing unit 110D, fifth processing unit 110E, and sixth processing unit 110F from a second group 115B of processing units and the third processing unit 110C, fourth processing unit 110D, fifth processing unit 110E, and sixth processing unit 110F are each in direct wired, cabled, and/or PCB-based communication with one another.

The plurality of groups 115 of processing units 110 may be selectively in communication with one another via the on-tray communication bridge 120. In various embodiments, the one-tray communication bridge 120 is configured to provide communication links between respective groups 115 of processing units. For example, the on-tray communication bridge may be configured to cause each group 115 of processing units to be a separate L1 domain, subsets of the groups 115 of processing units to form separate L1 domains, or for the plurality of groups 115 of processing units to form a common L1 domain. For example, the on-tray communication bridge 120 may be configured to cause a first group 115A of processing units (e.g., first processing unit 110A and second processing unit 110B) to be a first L1 domain on the tray 100, a second group 115B of processing units (e.g., third processing unit 110C, fourth processing unit 110D, fifth processing unit 110E, and sixth processing unit 110F) to be a second L1 domain on the tray 100, a third group of 115C of processing units (e.g., seventh processing unit 110G, eighth processing unit 110H, ninth processing unit 110I, and tenth processing unit 110J) to be a third L1 domain on the tray 100, and a fourth group 115D of processing units (e.g., eleventh processing unit 110K and twelfth processing unit 110L) to be a fourth L1 domain on the tray 100. In another scenarios, the on-tray communication bridge may be configured to cause the first group 115A of processing units and the second group 115B of processing units to be a first L1 domain on the tray 100 and the third group 115C of processing units and the fourth group 115D of processing units to be a second L1 domain on the tray 100. In another scenario, the on-tray communication bridge may cause the first group 115A of processing units, the second group 115B of processing units, the third group 115C of processing units, and the fourth group 115D of processing units to provide a single L1 domain on the tray 100.

In some embodiments, the on-tray communication bridge 120 has a configurable communication topology. For example, the on-tray communication bridge 120 may be configured to enable dynamic assignment of groups of 115 of processing units 110 to L1 domains defined on the tray 100. For example, in certain embodiments, a ToR switch in communication with the one or more L1 domains hosted by the tray 100, an L2 domain component of a datacenter including the tray 100, and/or another component may be configured to dynamically reconfigure the communication links provided by the on-tray communication bridge 120. For example, the ToR switch or other component of the datacenter including the tray 100 may cause the on-tray communication bridge 120 to define a single L1 domain on the tray 100 (e.g., including all of the groups 115 of processing units 110 hosted by the tray 100) for performance of a first task and may define a plurality of L1 domains on the tray 100 (e.g., each including a single group 115 of the processing units 110 hosted by the tray 100 or including a subset of groups 115 (at least two groups but not all the groups) of processing units 110 hosted by the tray 100) for performance of a second task.

In certain embodiments, the on-tray communication bridge 120 has a fixed communication topology. For example, the communication topology of a particular on-tray communication bridge 120 may not be configurable. In some such embodiments, the on-tray communication bridge 120 may be pluggably secured into communication with the plurality of groups 115 of processing units 110. For example, the on-tray communication bridge 120 may comprise one or more connectors configured to mate with and/or be coupled to corresponding connectors of the tray 100 such that a first on-tray communication bridge 120 having a first communication topology may be unplugged from the tray 100 and a second on-tray communication bridge 120 having a second communication topology may be plugged into the tray 100 to re-configure one or more L1 domains hosted by the tray 100. In various embodiments, the corresponding connectors of the tray 100 may be the cartridge connectors 130 or a different set of connectors that are disposed on a front side or edge of the tray 100 (e.g., the side or edge of the tray opposite the side or edge of the tray that the cartridge connectors 130 and the busbar connector 140 extend from).

In various embodiments, software operating on one or more groups of processing units can be optimized for specific size domains (e.g., domains having a particular number of processing units). In certain embodiments, the software optimization is performed through config or firmware updates to the L1 domain (e.g., server) automatically after a hardware reconfigure. For example, after dynamically or physically (e.g., physically switching out of the on-tray communication bridge) reconfiguring the number of L1 domains on the tray 100, a config or firmware update may automatically be performed to optimize the software executing on the one or more L1 domains on tray 100 for the updated domain size.

In various embodiments, the tray 100 includes a plurality of cartridge connectors 130 (e.g., 130A-130D). Each group 115 of processing units 110 is in communication with a respective cartridge connector 130. In certain embodiments, the on-tray communication bridge 120 is configured to provide communication links between respective and/or selected groups 115 of processing units 110 by interface with the plurality of cartridge connectors 130. For example, the on-tray communication bridge 120 may be configured to pluggably connect to the cartridge connectors 130 and/or otherwise be mechanically coupled to and/or secured into communication with the cartridge connectors 130. For example, the cartridge connectors 130 may extend outward from a back side or edge of the tray 100. The on-tray communication bridge 120 may be mechanically coupled to the cartridge connectors 130 such that a gap 102 is present between the back side or edge of the tray and the on-tray communication bridge 120, in certain embodiments.

In various embodiments, the on-tray communication bridge 120 is an NVlink bridge. NVLink is a protocol that addresses the communication limitations between GPUs and/or other processing units within a server. Unlike traditional PCIe switches, which have limited bandwidth, NVLink enables high-speed direct interconnection between GPUs and/or other processing units within the server. In various embodiments, the on-tray communication bridge 120 is a communication bridge that uses the NVlink protocol.

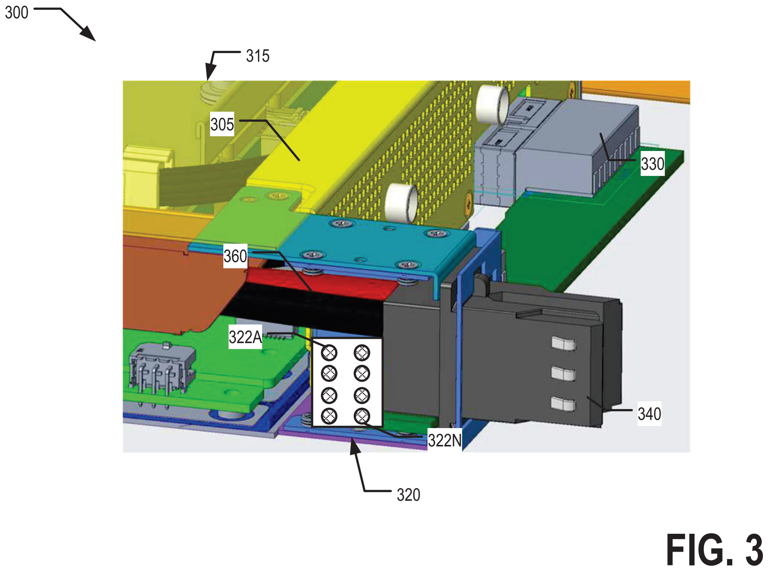

In various embodiments the on-tray communication bridge 120 is a cabled communication bridge configured to interface with the plurality of cartridge connectors (as shown in Figure 3) or a printed circuit board (PCB)-based communication bridge. For example, an on-tray communication bridge may be formed on a PCB 125 that hosts electrical traces, circuitry components, and/or the like configured to provide a configurable or fixed communication links between selected groups 115 of processing units 110. For example, the PCB 125 may host electrical traces configured to place pairs of groups 115 of processing units 110 into communication with one another (e.g., via interfacing with respective cartridge connectors 130) and a plurality of switches that may be controlled to activate or de-activate selected communication links. For example, the PCB 125 hosting the on-tray communication bridge 120 may provide a communication link between a first group 115A of processing units and a second group of processing units that includes one or more traces configured to place the first group 115A of processing units 110 into communication with the second group 115B of processing units 110 (e.g., via interfacing with a first cartridge connector 130A and a second cartridge connector 130B) and a switch configured to control whether the communication link is active or not active. The switch may be controlled by a workload orchestrator/manager of the datacenter, ToR switch corresponding to the tray 100 (e.g., mounted in the same rack 405 as the tray 100), and L2 domain component corresponding to the tray 100, and/or the like. In some embodiments, the activation or deactivation of communication links between groups of processing units is controlled by an NVlink switch. An NVlink switch is configured to connect GPU devices and/or other processing units/devices across hosts. In one embodiment, an NVlink switch has a 1U size design with 32 octal small form-factor pluggable (OSFP) ports; each OSFP comprises eight 112G PAM4 lanes, and each switch has two built-in NVSwitch3 chips.

Other than the on-tray communication bridge 120, the tray 100 does not accommodate communication between different groups 115 of processing unites 110. For example, when the on-tray communication bridge 120 provides a communication link between a first group 115A of processing units and a second group 115B of processing units, that communication link is the only avenue for direct communication between the first group 115A of processing units and the second group 115B of processing units. When the on-tray communication bridge 120 does not provide a communication link between a first group 115A of processing units and a second group 115B of processing units, no means for direct communication between the first group 115A of processing units and the second group 115B of processing units exists.

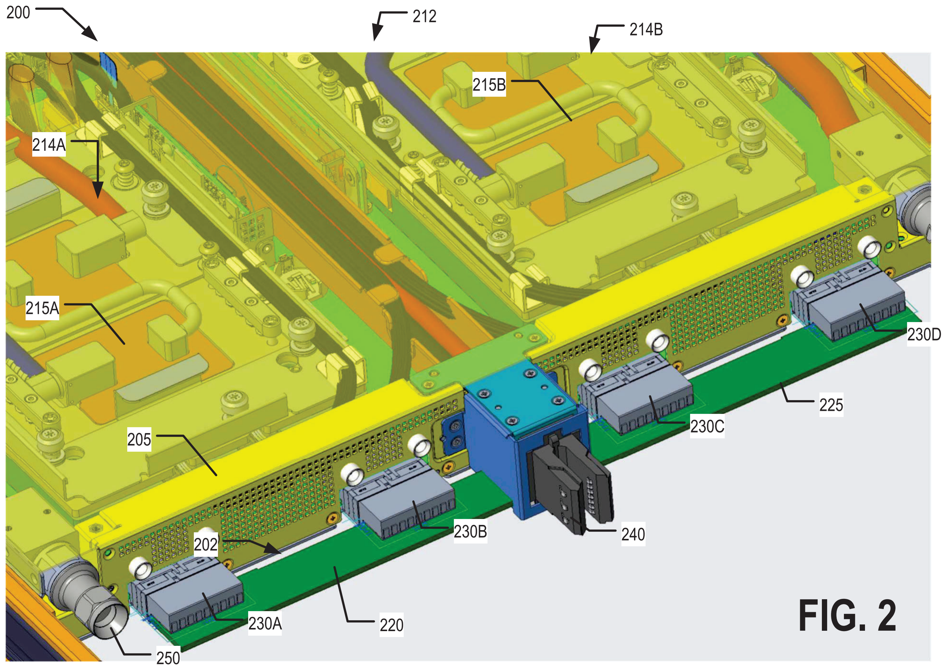

Figure 2 provides a perspective view of a portion of a tray 200 hosting processing circuitry 212. The processing circuitry 212 is provided as individual units of processing circuitry 214A, 214B. For example, the processing circuitry 212 comprises a first group of processing units 215A and a second group of processing units 215B. The processing circuitry 212 hosted by the tray 200 may include additional groups of processing units that are not shown in the figure. Each group of processing units 215 includes at least one of a CPU, PPU, GPU, DPU, QPU, and/or other processing unit. Each group of processing units 215 is in wired or cabled communication with a respective cartridge connector 230 (e.g., 230A-230D). In various embodiments, the cartridge connectors 230 extend outward from a back side or edge of the tray 200. A busbar connector 240 may also extend outward from the back side or edge of the tray 200. In the illustrated embodiment, the tray 200 also includes liquid cooling ports 250 configured to place a liquid cooling system of the tray 200 into fluid communication with a liquid cooling manifold 440 of a rack 405.

The tray 200 further includes an on-tray communication bridge 220 that is formed on a PCB 225. Routing within this PCB can enable dual or 4 GPU interconnected nodes leveraging the same tray and GPU module as a 72GPU node. The same tray could connect to a cable cartridge and connect to other trays. The PCB 225 is coupled to the tray 200 such that circuitry of the on-tray communication bridge 220 interfaces with the cartridge connectors 230. For example, the PCB 225 is mechanically coupled to the cartridge connectors 230 such that a gap 202 is provided between a back wall 205 of the tray and the PCB 225 hosting the on-tray communication bridge 220. The mechanical coupling of the PCB 225 to the cartridge connectors 230 may place and/or secure circuitry of the on-tray communication bridge 220 into communication with the groups of processing units 215 via the respective cartridge connectors 230. The on-tray communication bridge 220 is configured to control a plurality of L1 domains each including a single group of processing units 215, two or more L1 domains that each include a subset of the plurality of groups of processing units 215, or a single L1 domain that includes all of the groups of processing units 215 hosted by the tray 200. For example, the on-tray communication bridge 220 controls and/or defines the L1 domains hosted by the tray 200 by either providing a communication link between a selected pair of groups of processing units or not providing a communication link between the selected pair of groups of processing units.

Figure 3 provides a partial cross-sectional view of an example tray 300 comprising a cabled on-tray communication bridge 320. The tray 300 comprises a plurality of groups of processing units 315 that are each in cabled or wired communication with a respective cartridge connector 330. The cartridge connectors 330 extend outward from a back side or edge of the tray 300. For example, the cartridge connectors 330 extend outward from the back wall 305 of the tray 300. A busbar connector 340 may also extend outward from the back side or edge of the tray 300. The busbar connector 340 may provide power to power distribution circuitry of the tray via electrical transmission cables 360.

In the illustrated embodiment, the on-tray communication bridge 320 comprises a plurality of wires or cables 322A-322N. The wires or cables 322A-N may interface with respective cartridge connectors 330 of the tray to control (e.g., enable or prevent) communication between various groups of processing units 315 hosted by the tray 300. Each group of processing units 315 includes at least one of a CPU, PPU, GPU, DPU, QPU, and/or other processing unit. In the illustrated embodiment, the wires or cables 322A-322N of the on-tray communication bridge 320 are routed underneath the electrical transmission cables 360. The on-tray communication bridge 320 is configured to control a plurality of L1 domains each including a single group of processing units 315, two or more L1 domains that each include a subset of the plurality of groups of processing units 315, or a single L1 domain that includes all of the groups of processing units 315 hosted by the tray 300.

### Example Datacenter

Figure 4 illustrates at least a portion of a datacenter 400. The datacenter 400 includes at least one tray 100 mounted within a rack 405. The datacenter 400 includes a first rack 405A that includes an open rack assembly 410A and a second rack 405B that includes a cabinet rack assembly 410B. In various embodiments, a datacenter may include one or more racks having an open rack assembly (e.g., possibly in accordance with open rack version 3 (ORV3) standards) and/or one or more racks having a cabinet rack assembly.

The first rack 405A comprises a cable cartridge 450 comprising a plurality of cartridge connectors 452 configured to mate with and/or couple to corresponding cartridge connectors 130 of the tray 100. The first rack 405A further includes a busbar 420 configured to be in electrical communication with the busbar connector 140 to provide electrical power to the tray 100. The first rack 405A further includes a chassis 430 configured to support the tray 100 and/or provide a structure to which the tray 100 may be mounted. In some embodiments, the first rack 405A further includes a liquid cooling manifold 440 configured to be placed into fluid communication with liquid cooling ports 250 of a tray so as to provide liquid cooling of the tray.

In the illustrated embodiment, the second rack 405B includes a rack enclosure 415. In at least one embodiment, the rack enclosure 415 may be a standard Electronic Industries Alliance (EIA) rack enclosure, among others, and remain within the purview of the disclosure. In at least one embodiment, the rack enclosure 415 includes an enclosure 412, a rail system 425 located within the enclosure 412, and an optional door 432. While the second rack 405B is shown as including a rack enclosure 415, some embodiments may include a rack similar to rack 405B but without a rack enclosure 415.

In at least one embodiment, the first rack assembly 410B and/or the rack enclosure 415 has a rack width (wᵣ), a rack height (hᵣ) and a rack depth (dᵣ) (not illustrated), which may be defined by the rail system 425. In at least one embodiment, while not limited to such, the rack enclosure 415 employs a width (wᵣ) of either approximately 483 mm (e.g., approximately 19 inches) or approximately 584 mm (e.g., approximately 23 inches). In at least one embodiment, the rack enclosure 415 employs a height (hᵣ) of approximately 1246 mm (e.g., 28 U-approximately 49 inches), approximately 1778 mm (e.g., 40 U-approximately 70 inches), approximately 1867 mm (e.g., 42 U-approximately 73.5 inches), approximately 2000 mm (e.g., 45 U-approximately 78.75 inches), or approximately 2134 mm (e.g., 48 U-approximately 84 inches). In at least one embodiment, the rack height (hᵣ) is at least twenty-eight rack units (28 U), and the rack width (wᵣ) is at least approximately 480 mm. In at least one embodiment, the depth (dᵣ) of the data center rack often varies, for example depending on the equipment that will be housed within the rack enclosure 415. The first rack assembly 410A may have a similar or different rack width, rack height, and/or rack depth, as appropriate for the application.

In at least one embodiment, including the embodiment of FIG. 4, one or more power distribution units 445 are physically coupled to the rack enclosure 415. In at least one embodiment, a first power distribution unit 445A and a second power distribution unit 445B are physically coupled to the rack enclosure 415. In at least one embodiment, such as the embodiment of FIG. 4, the power distribution units 445A, 445B are fixed within the rail system 425 using one or more fasteners 428. In at least one embodiment, the power distribution units 445A, 445B may be any power distribution unit designed, manufactured and operated according to the present disclosure. In at least one embodiment, the power distribution units 445A, 445B would each include a power distribution unit enclosure having a connector surface, one or more low power inlet connectors extending through the connector surface, and one or more higher power inlet connectors extending through the connector surface, as described above. In at least one embodiment, a ratio of the number of the one or more higher power inlet connectors to the number of the one or more low power inlet connectors for each of the power distribution units 445A, 445B is at least 1:1. In at least one embodiment, the one or more low power inlet connectors and one or more higher power inlet connectors, for each of the power distribution units 445A, 445B , may collectively have a load power capacity of at least about 17.3 kVA.

In at least one embodiment, the power distribution units 445A, 445B are coupled to a main power source 422 using one or more main power cables 455, which may each in turn employ an IED 60309 plug at an end of the main power cable 455 opposite the power distribution units 445A, 445B. In at least one embodiment, the main power source 422 is a busbar 420 located within the enclosure 412. In at least one embodiment, the main power source 422 comprises a different feature than a busbar. In at least one embodiment, the main power cables 455 extend between the main power source 422 and a main power interface of the power distribution units 445A, 445B.

In at least one embodiment, the power distribution units 445A, 445B are positioned within about 25 percent of a vertical midpoint (e.g., as defined by a midpoint of height (hᵣ)) of the rail system 425. In at least one embodiment, the power distribution units 445A, 445B are positioned within about 10 percent of the vertical midpoint of the rail system 425, and in even yet at least one other embodiment within about 5 percent of the vertical midpoint of the rail system 425. In at least one embodiment, such a position may allow the power distribution units 445A, 445B to be substantially equal distance from any electronics above and below them in the rail system 425.

In at least one embodiment, the second rack 405B additionally includes a first tray 460A and a second tray 460B, where the first and second trays 460A, 460B are configured to be physically coupled to the rack enclosure 415 and to host and/or be respective data servers. For example, the trays 460A, 460B may be similar to trays 100, 200, 300 in that they comprise processing circuitry configured as a plurality of individual units of processing circuitry and/or a plurality of groups of processing units. The trays 460A, 460B may further include an on-tray communication bridge configured to provide communication links between the respective plurality of individual units of processing circuitry such that the individual units of processing circuitry may be operated independently or in select groups. For example, the on-tray communication bridge may be configured to provide communication links between respective groups of processing units. The individual units of processing circuitry and/or the groups of processing units may include one or more of CPUs, GPUs, DPUs, QPUs, PPUs, and/or the like. In at least one embodiment, one or both of the first and second trays 460A, 460B may be data servers that include other types of processors, including application-specific integrated circuits (ASICs), digital signal processors (DSPs), or programmable logic devices such as programmable array logic (PAL), generic array logic (GAL), field programmable gate arrays (FPGA), or another type of computer processing device (CPD). In at least one embodiment, the first and second data servers hosted by the trays 460A, 460B, may be a collection of CPU, GPU, and other data servers including the aforementioned processors.

In at least one embodiment, one or both of the first and second trays 460A, 460B may host and/or be GPU data servers from the DGX product line from NVIDIA. In at least one embodiment, including the illustrated embodiment of FIG. 4, both the first and second trays 460A, 460B host and/or are DGX-2 GPU data servers, as might be obtained from NVIDIA. In at least one embodiment, unless otherwise indicated, the present disclosure should not be limited to CPU or GPU data servers, and moreover should not be limited to any specific manufacturer thereof.

In at least one embodiment, including in the embodiment of FIG. 4, the first and second trays 460A, 460B are fixed within the rail system 425 using the one or more fasteners 428. In at least one embodiment, the first and second trays 460A, 460B and/or individual units processing circuitry or processing units hosted thereby are additionally electrically coupled to the power distribution units 445A, 445B. In at least one embodiment, one or more server power cords 470 couple higher power inlet connectors of the power distribution units 445A, 445B to higher power inlet connectors of the first and second trays 460A, 460B.

In at least one embodiment, the second rack 405A additionally includes a low power peripheral device 480 physically coupled to the rack enclosure 415. In at least one embodiment, the low power peripheral device is fixed within the rail system 425 using the one or more fasteners 428. In at least one embodiment, the low power peripheral device 480 is additionally electrically coupled to one or more of the power distribution units 445A, 445B. In at least one embodiment, a power cord 490 couples a low power inlet connector of the power distribution unit 455A to a low power inlet connector of the low power peripheral device 480. In at least one embodiment, the low power peripheral device 480 may comprise many different devices and remain within the scope of the disclosure. In at least one embodiment, the low power peripheral device 480 is a low power cooling device.

In at least one embodiment, the power distribution units, such as the power distribution units 445A, 445B are particularly advantageous when used in a rack enclosure 415 along with one or more data servers. In at least one embodiment, such a design reduces the overall airflow impedance of the second rack 405B, and thus provides improved cooling characteristics. In at least one embodiment, the rack mount power distribution units 445A, 445B, in contrast to strip mounted power distribution units, additionally allow the power supplies 472 of the first and second trays 460A, 460B to be easily replaced, for example by sliding them out of the first and second trays 460A, 460B while the first and second trays 460A, 460B remain fixed within the rail system 425. In at least one embodiment, for instance in at least one typical strip mounted power distribution unit design, the strip mounted power distribution unit substantially impedes the removal of the power supplies 472, whereas the rack mount power distribution units 445A, 445B do not.

In various embodiments, at least one tray of the datacenter 400 includes a plurality of processing units and the plurality of processing units are in groups of processing units. The processing units within a group of processing units are in communication with one another. The at least one tray of the datacenter 400 includes an on-tray communication bridge configured to control communication between groups of processing units hosted by the at least one tray. For example, the on-tray communication bridge may be configured to only communicate with and/or provide communication links between groups of processing units hosted by the same tray.

In various embodiments, the on-tray communication bridge defines the configurable number of L1 domains of the tray. For example, the on-tray communication bridge, either via a dynamically configurable communication topology or a fixed communication topology, is configured to define, at any one point in time, a plurality of L1 domains on the tray that each include a single group of processing units, two or more L1 domains on the tray that each include a subset of the plurality of groups of processing units, or a single L1 domain on the tray that includes all of the groups of processing units hosted by the tray

In various embodiments, the datacenter 400 is configured to enable the configurability of L1 domains of one or more trays. For example, switches of the datacenter 400 may be configured control operation of the on-tray communication bridge to cause the on-tray communication bridge to provide communication links such that the tray provides a plurality of L1 domains that each include a single group of processing units, two or more L1 domains that each include a subset of the plurality of groups of processing units, or a single L1 domain that includes all of the groups of processing units hosted by the tray. In another example, when the on-tray communication bridge has a fixed communication topology, a switch of the datacenter 400 may be configured to determine based on user input and/or on one or more communications received from one or more groups of processing units and/or L1 domains hosted by the tray, determine a number and/or configuration of one or more L1 domains hosted by the tray as a result of the communication topology of the on-tray communication bridge and operate the one or more L1 domains hosted by the tray accordingly.

Datacenters may include multiple network switches in a particular topology, such as a fat tree topology, a slim fly topology, a dragonfly topology, and/or the like. The specifications and makeup of the network switches in the topology affects the overall network performance (e.g., bandwidth capability) of the datacenter.

Datacenters are the storage and data processing hubs of the internet. The massive deployment of cloud applications is causing datacenters to expand exponentially in size, stimulating the development of faster switches than can cope with the increasing data traffic inside the datacenter. Current state-of-the-art switches are capable of handling 12.8 Tb/s of traffic by employing electrical switches in the form of application specific integrated circuits (ASICs) equipped with 256 data lanes, each operating at 50 Gbps. Such switching ASICs typically consume as much as 400 W, and the power consumption of the optical transceiver interfaces attached to each ASIC is comparable. To keep pace with traffic demand, switch capacity doubles approximately every two years. To date, this rapid scaling has been made possible by exploiting advances in manufacturing (e.g., CMOS techniques), collectively described by Moore's law (i.e., the observation that the number of transistors in a dense integrated circuit doubles about every two years). However, in recent years there are strong indications of Moore's law slowing down, which raises concerns about the capability to sustain the target scaling rate of switch capacity. As a result, alternative technologies are being investigated.

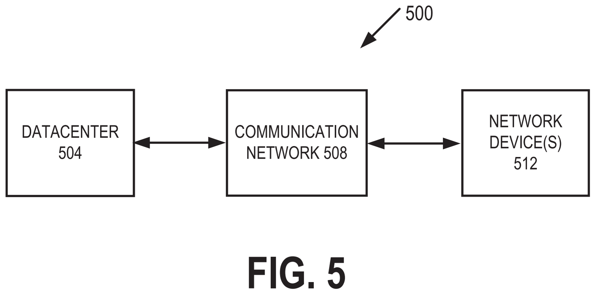

Figure 5 illustrates a system 500 according to at least one example embodiment. The system 500 includes a datacenter 504, a communication network 508, and one or more network devices 512. In at least one example embodiment, the datacenter 504 corresponds to a collection of network devices, such as network switches (e.g., Ethernet switches) connected with a collection of servers or compute nodes. The datacenter 504 may adhere to a networking topology (e.g., a hierarchal networking topology), such as a fat tree topology, a Slim Fly topology, a Dragonfly topology, and/or the like. The datacenter 504 routes traffic amongst the network switches and servers therein, and at least one layer of the topology in the datacenter 504 is coupled to the communication network 508 to allow networking traffic to flow between the datacenter 504 and the network device(s) 512.

Examples of the communication network 508 that may be used to connect the datacenter 504 and the network device(s) 512 include an Internet Protocol (IP) network, an Ethernet network, an InfiniBand (TB) network, a Fibre Channel network, the Internet, a cellular communication network, a wireless communication network, combinations thereof (e.g., Fibre Channel over Ethernet), variants thereof, and/or the like.

The one or more network devices 512 may include switch, router, or Network Interface Controller (NIC), interconnect using ports, one or more of Personal Computer (PC), a laptop, a tablet, a smartphone, a server, a collection of servers, and/or any suitable computing device for sending and receiving signals over the communication network 508. In at least one example embodiment, the one or more network devices 512 correspond to another datacenter, similar to or the same as datacenter 504.

As noted above, the datacenter 504 and/or the network device(s) 512 may include storage devices and/or processing circuitry for carrying out computing tasks, for example, tasks associated with controlling the flow of data internally and/or over the communication network 508. Such processing circuitry may comprise software, hardware, or a combination thereof. For example, the processing circuitry may include a memory including executable instructions and a processor (e.g., a microprocessor) that executes the instructions on the memory. The memory may correspond to any suitable type of memory device or collection of memory devices configured to store instructions. Non-limiting examples of suitable memory devices that may be used include Flash memory, Random Access Memory (RAM), Read Only Memory (ROM), variants thereof, combinations thereof, or the like. In some embodiments, the memory and processor may be integrated into a common device (e.g., a microprocessor may include integrated memory).

Additionally or alternatively, the processing circuitry may comprise hardware, such as an application specific integrated circuit (ASIC). For example, the processor may be or include one or more of an Integrated Circuit (IC) chip, a microprocessor, a Central Processing Unit (CPU), a Graphics Processing Unit (GPU), a Data Processing Unit (DPU), a Field Programmable Gate Array (FPGA), a network interface controller (NIC), an ASIC, combinations thereof, and the like. The processing circuitry may comprise an ASIC and/or may be capable of performing as a central processing unit (CPU), a graphics processing unit (GPU), a network interface controller (NIC), a data processing unit (DPU), or any other computing device in which with data is received and/or transmitted.

Some or all of the processing circuitry may be provided on a Printed Circuit Board (PCB) or collection of PCBs. It should be appreciated that any appropriate type of electrical component or collection of electrical components may be suitable for inclusion in the processing circuitry.

In addition, although not explicitly shown, it should be appreciated that the datacenter 504 and network device(s) 512 may include one or more communication interfaces for facilitating wired and/or wireless communication between one another and other unillustrated elements of the system 500.

In related art systems, a fat tree topology may use the same electrical switching devices on all layers (edge, aggregation, core). For example, each switching device may be 1 U switch, where 1 U refers to the industry standard size for rack-mounted switch and/or server. The interconnection between switches of different layers may be accomplished with optical links or optical interconnects using active optical cables and optical transceivers implemented in a pluggable form factor (also referred to as "pluggables").

Optical Datacenter Networks rely on allocation and deallocation of light paths from the data sources to the destinations end-ports to guarantee no light collisions and data loss occur in the fabric. Traditionally the allocation algorithms are run from a central entity which considers the entire demand for source and destination flows and try to find the most dense mapping of these demands to network resources over a single or multiple time periods.

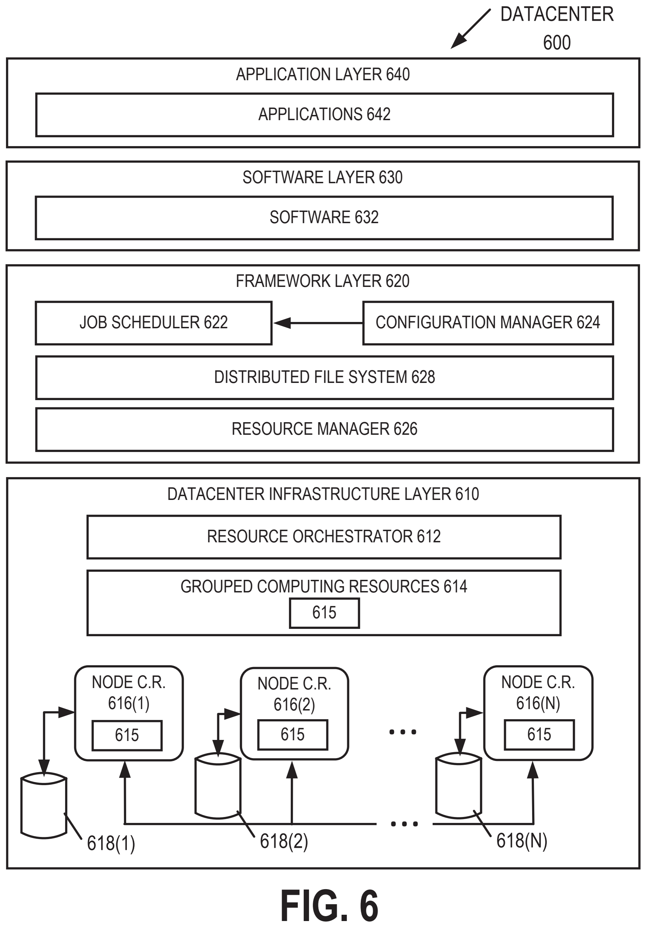

Figure 6 illustrates an example datacenter 600, in which at least one embodiment may be used. In at least one embodiment, datacenter 600 includes a datacenter infrastructure layer 610, a framework layer 620, a software layer 630, and an application layer 640. In various embodiments, the datacenter infrastructure layer 610 may include one or more trays of various embodiments. For example, the node computing resources 616(1)-616(N) may include processing units that are organized into groups on trays of various embodiments. For example, the grouped computing resources 614 may comprise one or more configurable L1 domains.

In at least one embodiment, as shown in Figure 6, datacenter infrastructure layer 610 may include a resource orchestrator 612, grouped computing resources 614, and node computing resources ("node C.R.s") 616(1)-616(N), where "N" represents a positive integer (which may be a different integer "N" than used in other figures). In at least one embodiment, node C.R.s 616(1)-616(N) may include, but are not limited to, any number of central processing units ("CPUs") or other processors (including accelerators, field programmable gate arrays (FPGAs), graphics processors, etc.), memory storage devices 618(1)-618(N) (e.g., dynamic read-only memory, solid state storage or disk drives), network input/output ("NW I/O") devices, network switches, virtual machines ("VMs"), power modules, and cooling modules, etc. In at least one embodiment, one or more node C.R.s from among node C.R.s 616(1)-616(N) may be a server having one or more of above-mentioned computing resources.

In at least one embodiment, grouped computing resources 614 may include separate groupings of node C.R.s housed within one or more racks (not shown), or many racks housed in datacenters at various geographical locations (also not shown). In at least one embodiment, separate groupings of node C.R.s within grouped computing resources 614 may include grouped compute, network, memory, or storage resources that may be configured or allocated to support one or more workloads. In at least one embodiment, several node C.R.s including CPUs or processors may grouped within one or more racks to provide compute resources to support one or more workloads. In at least one embodiment, one or more racks may also include any number of power modules, cooling modules, and network switches, in any combination.

In at least one embodiment, resource orchestrator 612 may configure or otherwise control one or more node C.R.s 616(1)-616(N) and/or grouped computing resources 614. In at least one embodiment, resource orchestrator 612 may include a software design infrastructure ("SDI") management entity for datacenter 600. In at least one embodiment, resource orchestrator 612 may include hardware, software or some combination thereof.

In at least one embodiment, as shown in Figure 6, framework layer 620 includes a job scheduler 622, a configuration manager 624, a resource manager 626 and a distributed file system 628. In at least one embodiment, framework layer 620 may include a framework to support software 632 of software layer 630 and/or one or more application(s) 642 of application layer 640. In at least one embodiment, software 632 or application(s) 642 may respectively include web-based service software or applications, such as those provided by Amazon Web Services, Google Cloud and Microsoft Azure. In at least one embodiment, framework layer 620 may be, but is not limited to, a type of free and open-source software web application framework such as Apache Spark^{™} (hereinafter "Spark") that may utilize distributed file system 628 for large-scale data processing (e.g., "big data"). In at least one embodiment, job scheduler 622 may include a Spark driver to facilitate scheduling of workloads supported by various layers of datacenter 600. In at least one embodiment, configuration manager 624 may be capable of configuring different layers such as software layer 630 and framework layer 620 including Spark and distributed file system 628 for supporting large-scale data processing. In at least one embodiment, resource manager 626 may be capable of managing clustered or grouped computing resources mapped to or allocated for support of distributed file system 628 and job scheduler 622. In at least one embodiment, clustered or grouped computing resources may include grouped computing resources 614 at datacenter infrastructure layer 610. In at least one embodiment, resource manager 626 may coordinate with resource orchestrator 612 to manage these mapped or allocated computing resources.

In at least one embodiment, software 632 included in software layer 630 may include software used by at least portions of node C.R.s 616(1)-616(N), grouped computing resources 614, and/or distributed file system 628 of framework layer 620. In at least one embodiment, one or more types of software may include, but are not limited to, Internet web page search software, e-mail virus scan software, database software, and streaming video content software.

In at least one embodiment, application(s) 642 included in application layer 640 may include one or more types of applications used by at least portions of node C.R.s 616(1)-616(N), grouped computing resources 614, and/or distributed file system 628 of framework layer 620. In at least one embodiment, one or more types of applications may include, but are not limited to, any number of a genomics application, a cognitive compute, application and a machine learning application, including training or inferencing software, machine learning framework software (e.g., PyTorch, TensorFlow, Caffe, etc.) or other machine learning applications used in conjunction with one or more embodiments.

In at least one embodiment, any of configuration manager 624, resource manager 626, and resource orchestrator 612 may implement any number and type of self-modifying actions based on any amount and type of data acquired in any technically feasible fashion. In at least one embodiment, self-modifying actions may relieve a datacenter operator of datacenter 600 from making possibly bad configuration decisions and possibly avoiding underutilized and/or poor performing portions of a datacenter.

In at least one embodiment, datacenter 600 may include tools, services, software, or other resources to train one or more machine learning models or predict or infer information using one or more machine learning models according to one or more embodiments described herein. For example, in at least one embodiment, a machine learning model may be trained by calculating weight parameters according to a neural network architecture using software and computing resources described above with respect to datacenter 600. In at least one embodiment, trained machine learning models corresponding to one or more neural networks may be used to infer or predict information using resources described above with respect to datacenter 600 by using weight parameters calculated through one or more training techniques described herein.

In at least one embodiment, datacenter may use CPUs, application-specific integrated circuits (ASICs), GPUs, FPGAs, or other hardware to perform training and/or inferencing using above-described resources. Moreover, one or more software and/or hardware resources described above may be configured as a service to allow users to train or performing inferencing of information, such as image recognition, speech recognition, or other artificial intelligence services.

Inference and/or training logic 615 are used to perform inferencing and/or training operations associated with one or more embodiments. In at least one embodiment, inference, and/or training logic 615 may be used in system Figure 6 for inferencing or predicting operations based, at least in part, on weight parameters calculated using neural network training operations, neural network functions and/or architectures, or neural network use cases described herein.

There are different ways that language models-such as large language models (LLM)-may be tuned in order to provide accurate results for particular natural language processing (NLP) tasks. In some cases, few-shot learning is used to tune the LLM at inference time by providing, as input to the LLM, one or more example input/output pairings along with a user's request. For example, an LLM input prompt used during few-shot learning may include a description of the task (e.g., "translate from English to French"), one or more examples of the task being performed (e.g., "sea otter=> loutre de ner"), and the prompt that the LLM is to complete (e.g., "cheese=>"). However, the accuracy of the output may not be satisfactory and finding a good input prompt that would facilitate an accurate output can require a lot of trial and error. In other cases, the LLM can be fine-tuned using a diversified set of datasets which include training inputs and corresponding target outputs. During fine-tuning, the weights of the LLM are modified to improve the accuracy of the model based on the training data within the datasets. Because the training data within the fine-tuning datasets is typically much smaller than the training data used to train the LLM, the fine-tuning process may eliminate the LLM's capability of generating diversified outputs because the model will be biased toward the limited number of examples in the fine-tuning datasets.

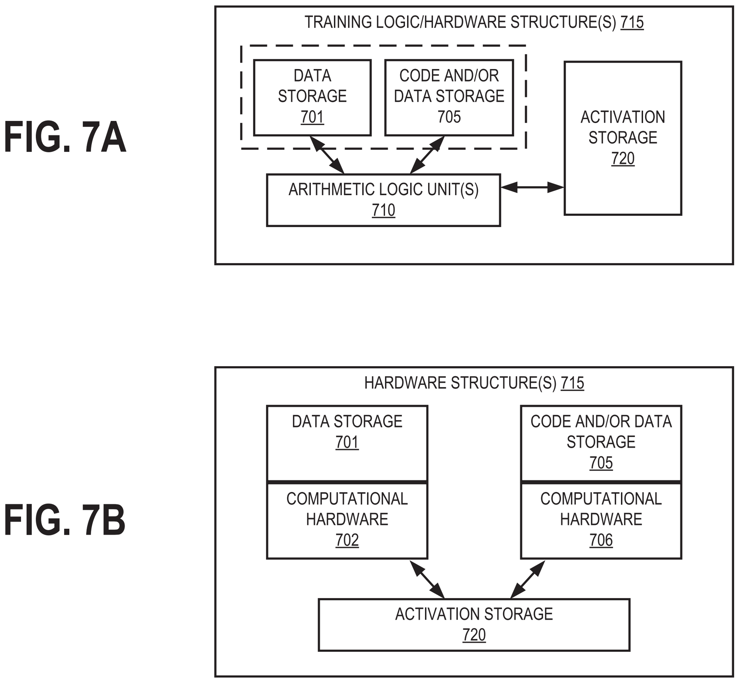

FIG. 7A illustrates inference and/or training logic 715 used to perform inferencing and/or training operations associated with one or more embodiments.

In at least one embodiment, inference and/or training logic 715 may include, without limitation, code and/or data storage 701 to store forward and/or output weight and/or input/output data, and/or other parameters to configure neurons or layers of a neural network trained and/or used for inferencing in aspects of one or more embodiments. In at least one embodiment, training logic 715 may include (or be coupled to code and/or data storage 701 that stores) graph code or other software to control timing and/or order, in which weight and/or other parameter information is to be loaded to configure processing units, including logic units, integer and/or floating point units (collectively, arithmetic logic units (ALUs) or simply circuits). In at least one embodiment, code, such as graph code, loads weight or other parameter information into processor ALUs based on an architecture of a neural network to which such code corresponds. In at least one embodiment, code and/or data storage 701 stores weight parameters and/or input/output data of each layer of a neural network trained or used in conjunction with one or more embodiments during forward propagation of input/output data and/or weight parameters during training and/or inferencing using aspects of one or more embodiments. In at least one embodiment, any portion of code and/or data storage 701 may be included with other on-chip or off-chip data storage, including a processor's L1, L2, or L3 cache or system memory.

In at least one embodiment, any portion of code and/or data storage 701 may be internal or external to one or more processors or other hardware logic devices or circuits. In at least one embodiment, code and/or data storage 701 may be cache memory, dynamic randomly addressable memory ("DRAM"), static randomly addressable memory ("SRAM"), non-volatile memory (e.g., flash memory), or other storage. In at least one embodiment, a choice of whether code and/or data storage 701 is internal or external to a processor, for example, or comprising DRAM, SRAM, flash or some other storage type may depend on available storage on-chip versus off-chip, latency requirements of training and/or inferencing functions being performed, batch size of data used in inferencing and/or training of a neural network, or some combination of these factors.

In at least one embodiment, inference and/or training logic 715 may include, without limitation, a code and/or data storage 705 to store backward and/or output weight and/or input/output data corresponding to neurons or layers of a neural network trained and/or used for inferencing in aspects of one or more embodiments. In at least one embodiment, code and/or data storage 705 stores weight parameters and/or input/output data of each layer of a neural network trained or used in conjunction with one or more embodiments during backward propagation of input/output data and/or weight parameters during training and/or inferencing using aspects of one or more embodiments. In at least one embodiment, training logic 715 may include (or be coupled to code and/or data storage 705 that stores) graph code or other software to control timing and/or order, in which weight and/or other parameter information is to be loaded to configure processing units, including logic units, integer and/or floating point units (collectively, arithmetic logic units (ALUs)).

In at least one embodiment, code, such as graph code, causes the loading of weight or other parameter information into processor ALUs based on an architecture of a neural network to which such code corresponds. In at least one embodiment, any portion of code and/or data storage 705 may be included with other on-chip or off-chip data storage, including a processor's L1, L2, or L3 cache or system memory. In at least one embodiment, any portion of code and/or data storage 705 may be internal or external to one or more processors or other hardware logic devices or circuits. In at least one embodiment, code and/or data storage 705 may be cache memory, DRAM, SRAM, non-volatile memory (e.g., flash memory), or other storage. In at least one embodiment, a choice of whether code and/or data storage 705 is internal or external to a processor, for example, or comprising DRAM, SRAM, flash memory or some other storage type may depend on available storage on-chip versus off-chip, latency requirements of training and/or inferencing functions being performed, batch size of data used in inferencing and/or training of a neural network, or some combination of these factors.

In at least one embodiment, code and/or data storage 701 and code and/or data storage 705 may be separate storage structures. In at least one embodiment, code and/or data storage 701 and code and/or data storage 705 may be a combined storage structure. In at least one embodiment, code and/or data storage 701 and code and/or data storage 705 may be partially combined and partially separate. In at least one embodiment, any portion of code and/or data storage 701 and code and/or data storage 705 may be included with other on-chip or off-chip data storage, including a processor's L1, L2, or L3 cache or system memory.

In at least one embodiment, inference and/or training logic 715 may include, without limitation, one or more arithmetic logic unit(s) ("ALU(s)") 710, including integer and/or floating point units, to perform logical and/or mathematical operations based, at least in part on, or indicated by, training and/or inference code (e.g., graph code), a result of which may produce activations (e.g., output values from layers or neurons within a neural network) stored in an activation storage 720 that are functions of input/output and/or weight parameter data stored in code and/or data storage 701 and/or code and/or data storage 705. In at least one embodiment, activations stored in activation storage 720 are generated according to linear algebraic and or matrix-based mathematics performed by ALU(s) 710 in response to performing instructions or other code, wherein weight values stored in code and/or data storage 705 and/or code and/or data storage 701 are used as operands along with other values, such as bias values, gradient information, momentum values, or other parameters or hyperparameters, any or all of which may be stored in code and/or data storage 705 or code and/or data storage 701 or another storage on or off-chip.

In at least one embodiment, ALU(s) 710 are included within one or more processors or other hardware logic devices or circuits, whereas in another embodiment, ALU(s) 710 may be external to a processor or other hardware logic device or circuit that uses them (e.g., a co-processor). In at least one embodiment, ALU(s) 710 may be included within a processor's execution units or otherwise within a bank of ALUs accessible by a processor's execution units either within the same processor or distributed between different processors of different types (e.g., central processing units, graphics processing units, fixed function units, etc.). In at least one embodiment, code and/or data storage 701, code and/or data storage 705, and activation storage 720 may share a processor or other hardware logic device or circuit, whereas in another embodiment, they may be in different processors or other hardware logic devices or circuits, or some combination of same and different processors or other hardware logic devices or circuits. In at least one embodiment, any portion of activation storage 720 may be included with other on-chip or off-chip data storage, including a processor's L1, L2, or L3 cache or system memory. Furthermore, inferencing and/or training code may be stored with other code accessible to a processor or other hardware logic or circuit and fetched and/or processed using a processor's fetch, decode, scheduling, execution, retirement and/or other logical circuits.

In at least one embodiment, activation storage 720 may be cache memory, DRAM, SRAM, non-volatile memory (e.g., flash memory), or other storage. In at least one embodiment, activation storage 720 may be completely or partially within or external to one or more processors or other logical circuits. In at least one embodiment, a choice of whether activation storage 720 is internal or external to a processor, for example, or comprising DRAM, SRAM, flash memory or some other storage type may depend on available storage on-chip versus off-chip, latency requirements of training and/or inferencing functions being performed, batch size of data used in inferencing and/or training of a neural network, or some combination of these factors.

In at least one embodiment, inference and/or training logic 715 illustrated in FIG. 7A may be used in conjunction with an application-specific integrated circuit ("ASIC"), such as a TensorFlow^{®} Processing Unit from Google, an inference processing unit (IPU) from Graphcore^{™}, or a Nervana^{®} (e.g., "Lake Crest") processor from Intel Corp. In at least one embodiment, inference and/or training logic 715 illustrated in FIG. 7A may be used in conjunction with central processing unit ("CPU") hardware, graphics processing unit ("GPU") hardware or other hardware, such as field programmable gate arrays ("FPGAs").

FIG. 7B illustrates inference and/or training logic 715, according to at least one embodiment. In at least one embodiment, inference and/or training logic 715 may include, without limitation, hardware logic in which computational resources are dedicated or otherwise exclusively used in conjunction with weight values or other information corresponding to one or more layers of neurons within a neural network. In at least one embodiment, inference and/or training logic 715 illustrated in FIG. 7B may be used in conjunction with an application-specific integrated circuit (ASIC), such as TensorFlow^{®} Processing Unit from Google, an inference processing unit (IPU) from Graphcore^{™}, or a Nervana^{®} (e.g., "Lake Crest") processor from Intel Corp. In at least one embodiment, inference and/or training logic 715 illustrated in FIG. 7B may be used in conjunction with central processing unit (CPU) hardware, graphics processing unit (GPU) hardware or other hardware, such as field programmable gate arrays (FPGAs). In at least one embodiment, inference and/or training logic 715 includes, without limitation, code and/or data storage 701 and code and/or data storage 705, which may be used to store code (e.g., graph code), weight values and/or other information, including bias values, gradient information, momentum values, and/or other parameter or hyperparameter information. In at least one embodiment illustrated in FIG. 7B, each of code and/or data storage 701 and code and/or data storage 705 is associated with a dedicated computational resource, such as computational hardware 702 and computational hardware 706, respectively. In at least one embodiment, each of computational hardware 702 and computational hardware 706 comprises one or more ALUs that perform mathematical functions, such as linear algebraic functions, only on information stored in code and/or data storage 701 and code and/or data storage 705, respectively, the result of which is stored in activation storage 720.

In at least one embodiment, each of code and/or data storage 701 and 705 and corresponding computational hardware 702 and 706, respectively, correspond to different layers of a neural network, such that resulting activation from one storage/computational pair 701/702 of code and/or data storage 701 and computational hardware 702 is provided as an input to a next storage/computational pair 705/706 of code and/or data storage 705 and computational hardware 706, in order to mirror a conceptual organization of a neural network. In at least one embodiment, each of storage/computational pairs 701/702 and 705/706 may correspond to more than one neural network layer. In at least one embodiment, additional storage/computation pairs (not shown) subsequent to or in parallel with storage/computation pairs 701/702 and 705/706 may be included in inference and/or training logic 715.

### Example System Use Case

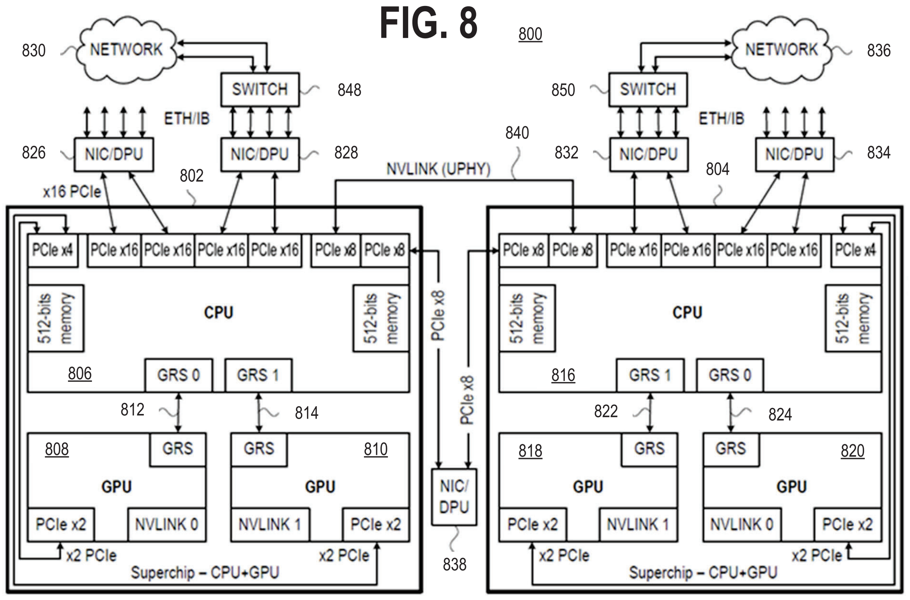

Figure 8 is a block diagram that schematically illustrates a computing system 800, e.g., a data center or a High-Performance Computing (HPC) cluster, in accordance with an embodiment that is described herein. System 800 comprises a plurality of subsystems, e.g., multiple processing devices coupled to each other, multiple network devices, and multiple networks, according to at least one embodiment. Computing system 800 is designed with multiple integrated circuits (referred to as processing devices), where each integrated circuit can include one or more CPUs and GPUs, forming a powerful and flexible architecture.

The various processing devices are interconnected via an NVLink or other high-speed interconnect, enabling high-speed communication between the subsystems, and are also connected through a NIC or DPU to ensure efficient data transfer across computing system 800 and to one or more external networks 830, 836. In the present example, system 800 comprises a packet switch 848 that connects NIC/DPU 828 to network 830, and a packet switch 850 that connects NIC/DPU 832 to network 836.

The coupling of processing devices through NVLink allows for seamless data exchange and parallel processing, enhancing overall computational performance. The processing devices are connected to multiple networks through one or more network interface controllers (NICs) or DPUs, enabling the system to handle complex, multi-network tasks with high bandwidth and low latency. This configuration is highly suitable for demanding applications that require significant processing power, such as artificial intelligence (AI), machine learning (ML), and data-intensive computing, while ensuring robust connectivity and scalability across various networked environments. The integrated circuits of the computing system 800 can include one or more CPUs and one or more GPUs.

Figure 8 also demonstrates an example architecture of a multi-GPU architecture. As illustrated in the figure, computing system 800 includes a processing device 802 with a multi-GPU architecture. In particular, processing device 802 may be a system-on-chip and includes multiple subsystems such as a CPU 806, a GPU 808, and a GPU 810. CPU 806 can be coupled to GPU 808 via a die-to-die (D2D) or chip-to-chip (C2C) interconnect 812, such as a Ground-Referenced Signaling interconnect (GRS interconnect). CPU 806 can be coupled to GPU 810 via a D2D or C2C interconnect 814. CPU 806 can also couple to GPU 808 and GPU 810 via PCIe interconnects.

CPU 806 can be coupled to one or more NICs or DPUs, which are coupled to one or more networks. For example, as illustrated in Fig. 3, CPU 806 is coupled to a first NIC/DPU 826, which is coupled to a network 830. CPU 806 is also coupled to a second NIC/DPU 828, which is coupled to network 830 via switch 848. NIC/DPU 826 and NIC/DPU 828 can be coupled to network 830 over Ethernet (ETH), NVLINK or InfiniBand (IB) connections, for example.

Computing system 800 also includes a processing device 804 with a multi-GPU architecture. In particular, processing device 804 includes multiple subsystems including a CPU 816, a GPU 818, and a GPU 820. CPU 816 can be coupled to GPU 818 via an D2D or C2C interconnect 822. CPU 816 can be coupled to GPU 820 via a D2D or C2C interconnect 824. CPU 816 can also couple to GPU 818 and GPU 820 via PCIe interconnects. CPU 816 can be coupled to one or more NICs or DPUs, which are coupled to one or more networks. For example, as illustrated in Fig. 3, CPU 816 is coupled to a first NIC/DPU 832, which is coupled to a network 836. CPU 816 is also coupled to a second NIC/DPU 834, which is coupled to network 836 via switch 850. NIC/DPU 832 and NIC/DPU 834 can be coupled to network 836 over Ethernet (ETH), NVLINK or InfiniBand (IB) connections.

In at least one embodiment, processing device 802 and processing device 804 can communication with each other via a NIC/DPU 838, such as over PCIe interconnects. Processing device 802 and processing device 804 can also communicate with each other over a high-bandwidth communication interconnects 840, such as an NVLink interconnect or other high-speed interconnects. The packet switches in Fig. 8 may comprise, for example, Nvidia Quantum-2 switches. The NICs/DPUs in the figure may comprise, for example, Nvidia Bluefield DPUs.

In various embodiments, one or more of the interconnects 812, 814, 822, 824 may be optical interconnects disclosed herein. Additionally, in various embodiments, switches 848, 850 may be in communication with NIC/DPU 828, 832, respectively, via one or more optical interconnects disclosed herein. In some embodiments, NIC/DPU 826, 834 may be in communication with one or more additional elements via optical interconnects disclosed herein. For example, various elements of the computing system 800 may be in communication with one another via one or more optical interconnects disclosed herein.

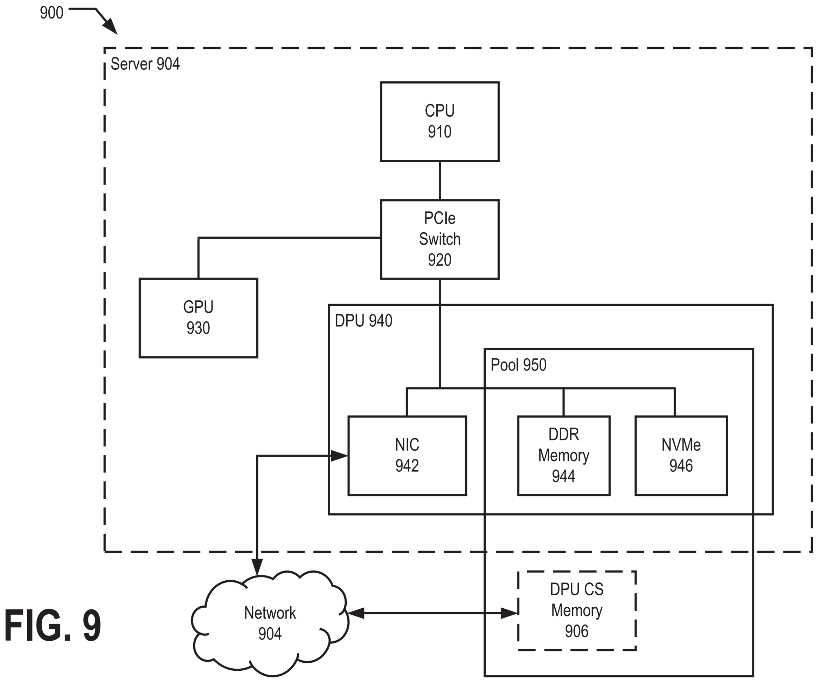

FIG. 9 illustrates an example computing environment 900 in which forward pass offloading to available memory can be performed, in accordance with at least one embodiment. It should be appreciated that embodiments of the present disclosure may also be used with reference to alternative environments and that specific discussion of components may be provided by way of non-limiting example and may include equivalents. Moreover, various features have been removed for clarity and conciseness. Additionally, systems and methods may be used with a variety of different architectures. The example computing environment 900 may include a server 902 which may be used to perform high performance computing (HPC) workloads, such as AI training or machine learning model training. In an embodiment, the server 902 may be an application instance or a compute node. The server 902 may include a CPU 910 associated with a switch 920, such as a peripheral component interconnect express (PCIe) switch, which may control at least some data transmission over communication paths interconnecting various components. In an embodiment, the CPU 910 may include a root complex processor.

The PCIe switch 920 may also be associated with a GPU 930 and a DPU 940, and may transmit data between at least some of the CPU 910, the GPU 930, the DPU 940, and other components (e.g., via one or more optical interconnects disclosed herein). In an embodiment, the PCIe switch 920 may be associated with more than one GPU or more than one DPU. In another embodiment, the PCIe switch 920 may be located within the DPU 940. The PCIe switch 920 may manage the transfer of at least some data between the CPU 910, the GPU 930, and the DPU 940. In another embodiment, the number of GPUs associated with the PCIe switch 920 may be equal to the number of DPUs associated with the PCIe switch 920. In at least one embodiment, the server 902 may include, without limitation, any number of the CPUs 910, the PCIe switches 920, the GPUs 930, and/or the DPUs 940, in any combination. For example, in at least one embodiment, server 902 could include eight, sixteen, thirty-two, and/or more GPUs 930. In at least one embodiment, communication paths interconnecting various components, including but not limited to the CPU 910, the PCIe switch 920, the GPU 930, and the DPU 940, in FIG. 9 may be implemented using any suitable protocols, such as peripheral component interconnect (PCI) based protocols (e.g., PCIe), or other bus or point-to-point communication interfaces and/or protocol(s), such as NV-Link high-speed interconnect, or interconnect protocols.

The DPU 940 may include a network interface controller (NIC) 942, a DDR memory 944, and a non-volatile memory express (NVMe) device 946. The NIC 942 may be able to interface with a network 904, which may also interface with additional NVMe devices available to the DPU 940, such as over fabric. In an embodiment, the DPU 940 may not include the NVMe device 946. In another embodiment, the NVMe device 946 may be located on the server 902 and not on the DPU 940. In yet another embodiment, the computing environment 900 may include more than one of the NVMe device 946, such as a first NVMe device in the DPU 940 and a second first NVMe device on the server 902 an associated directly with the PCIe switch 920. In an embodiment, the DPU 940 may not include the DDR memory 944 and may include a computational storage services (CSS) in place of, or in addition to, the DDR memory 944. For example, computing environment 900 may include DPU computational storage (CS) memory 906 available to the DPU 940 as part of the CSS. The network 904 may be able to interface with the DPU CS memory 906 through the NIC 942, according to any suitable interface protocol, such as remote direct memory access (RDMA) over Ethernet, InfiniBand, Fiber Channel, etc.

The total memory of the computing environment 900 available for data storage may be expanded through the use of the DPU 940 on nodes of the system. The DPU 940 may have access to a pool 950 of memory already available to the server 902, such as double data rate (DDR) memory, on-board NVMe devices, NVMe devices over fabric, and CS. The pool 950 of memory may include at least one of the DDR memory 944, NVMe 946, and the DPU CS memory 906. The DPU 940 may also be able to access the available memory of other DPUs as part of the pool 950, and other DPUs may be able to access the available memory of DPU 940, such as the pool 950 . This available memory can be accessed and utilized for data storage, without the addition of compute resources, such as compute nodes, which would be required using other solutions. The available pool 950 accessible to the DPU 940 may be provisioned for the server 902 to expand the total memory available for data storage, such as to reduce the data storage load on the CPU 910 or the GPU 930, which can instead increase the utilization of their memory for processing. For example, during training of an AI, the model states, residual states, activation functions, and checkpoints can be stored, or offloaded, on the pool 950 accessible to the DPU 940.

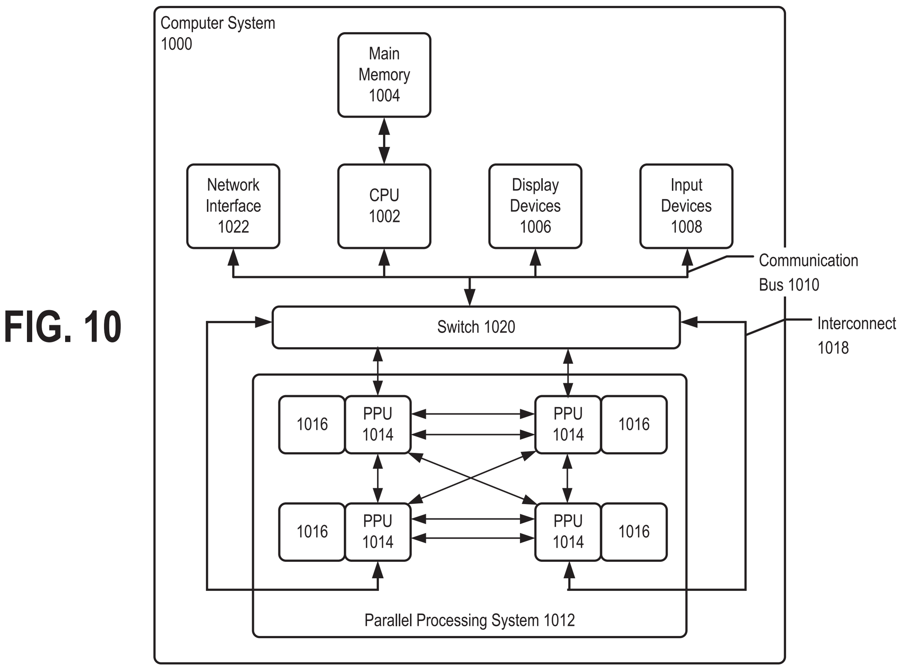

FIG. 10 illustrates a computer system 1000, according to at least one embodiment. In at least one embodiment, computer system 1000 comprises at least one optical interconnect of an example embodiment.

In at least one embodiment, computer system 1000 comprises, without limitation, at least one central processing unit ("CPU") 1002 that is connected to a communication bus 1010 implemented using any suitable protocol, such as PCI ("Peripheral Component Interconnect"), peripheral component interconnect express ("PCI-Express"), AGP ("Accelerated Graphics Port"), HyperTransport, or any other bus or point-to-point communication protocol(s). In at least one embodiment, computer system 1000 includes, without limitation, a main memory 1004 and control logic (e.g., implemented as hardware, software, or a combination thereof) and data are stored in main memory 1004 which may take form of random access memory ("RAM"). In at least one embodiment, a network interface subsystem ("network interface") 1022 provides an interface to other computing devices and networks for receiving data from and transmitting data to other systems from computer system 1000.

In at least one embodiment, computer system 1000, in at least one embodiment, includes, without limitation, input devices 1008, parallel processing system 1012, and display devices 1006 which can be implemented using a conventional cathode ray tube ("CRT"), liquid crystal display ("LCD"), light emitting diode ("LED"), plasma display, or other suitable display technologies. In at least one embodiment, user input is received from input devices 1008 such as keyboard, mouse, touchpad, microphone, and more. In at least one embodiment, each of foregoing modules can be situated on a single semiconductor platform to form a processing system.

In at least one embodiment, computer programs in form of machine-readable executable code or computer control logic algorithms are stored in main memory 1004 and/or secondary storage. Computer programs, if executed by one or more processors, enable system 1000 to perform various functions in accordance with at least one embodiment. memory 1004, storage, and/or any other storage are possible examples of computer-readable media. In at least one embodiment, secondary storage may refer to any suitable storage device or system such as a hard disk drive and/or a removable storage drive, representing a floppy disk drive, a magnetic tape drive, a compact disk drive, digital versatile disk ("DVD") drive, recording device, universal serial bus ("USB") flash memory, etc. In at least one embodiment, architecture and/or functionality of various previous figures are implemented in context of CPU 1002; parallel processing system 1012; an integrated circuit capable of at least a portion of capabilities of both CPU 1002; parallel processing system 1012; a chipset (e.g., a group of integrated circuits designed to work and sold as a unit for performing related functions, etc.); and any suitable combination of integrated circuit(s).

In at least one embodiment, architecture and/or functionality of various previous figures are implemented in context of a general computer system, a circuit board system, a game console system dedicated for entertainment purposes, an application-specific system, and more. In at least one embodiment, computer system 1000 may take form of a desktop computer, a laptop computer, a tablet computer, servers, supercomputers, a smart-phone (e.g., a wireless, hand-held device), personal digital assistant ("PDA"), a digital camera, a vehicle, a head mounted display, a hand-held electronic device, a mobile phone device, a television, workstation, game consoles, embedded system, and/or any other type of logic.

In at least one embodiment, parallel processing system 1012 includes, without limitation, a plurality of parallel processing units ("PPUs") 1014 and associated memories 1016. In at least one embodiment, PPUs 1014 are connected to a host processor or other peripheral devices via an interconnect 1018 and a switch 1020 or multiplexer. In at least one embodiment, parallel processing system 1012 distributes computational tasks across PPUs 1014 which can be parallelizable-for example, as part of distribution of computational tasks across multiple graphics processing unit ("GPU") thread blocks. In at least one embodiment, memory is shared and accessible (e.g., for read and/or write access) across some or all of PPUs 1014, although such shared memory may incur performance penalties relative to use of local memory and registers resident to a PPU 1014. In at least one embodiment, operation of PPUs 1014 is synchronized through use of a command such as_syncthreads(), wherein all threads in a block (e.g., executed across multiple PPUs 1014) to reach a certain point of execution of code before proceeding.

The PPUs 1014 may be in communication with one another and/or switch 1020 via one or more optical interconnects in accordance with example embodiments disclosed herein.

As discussed above, optical I/Os, which may also be referred to as optical connectors, are placed at the front panel of a network device. As mentioned above, connectivity between a multi-chip module (MCM) assembly and optical I/Os may be transferred to the front panel of the network device through optical fibers. This connection may be made directly with an optical I/O of the switching circuitry or may be made with one or more of the satellite chips. The connection is often made with one or more of the satellite chips because the satellite chips may include the electro-optic converters and, possibly, the serializer/deserializer (SERDES) to natively support the connection. The satellite chips may include one or more of aDSP processor, driver, trans-impedance amplifier, laser, modulator, photodiode, serializer-deserializer, or the like.

### Conclusion

Many modifications and other embodiments will come to mind to one skilled in the art to which this disclosure pertains having the benefit of the teachings presented in the foregoing descriptions and the associated drawings. Therefore, it is to be understood that the disclosure is not to be limited to the specific embodiments disclosed and that modifications and other embodiments are intended to be included within the scope of the appended claims. Although specific terms are employed herein, they are used in a generic and descriptive sense only and not for purposes of limitation.

It will be understood that aspects and embodiments are described above purely by way of example, and that modifications of detail can be made within the scope of the claims.

Each apparatus, method, and feature disclosed in the description, and (where appropriate) the claims and drawings may be provided independently or in any appropriate combination.

Reference numerals appearing in the claims are by way of illustration only and shall have no limiting effect on the scope of the claims.

## Claims

1. A tray comprising:
processing circuitry configured as a plurality of individual units; and
an on-tray communication bridge configured to provide communication links between the respective plurality of individual units such that individual units of the plurality of individual units may be operated independently or in select groups.

2. The tray of claim 1, further comprising a plurality of cartridge connectors, each cartridge connector configured to enable communication with a respective individual unit of the plurality of individual units and the tray is configured such that when the tray is mounted in a rack, each of the plurality of cartridge connectors are in communication with a cable cartridge of the rack.

3. The tray of claim 1 or 2, wherein the on-tray communication bridge is configured to control communication between the plurality of individual units to provide a configurable number of L1 domains on the tray.

4. A tray comprising:
a plurality of groups of processing units, each group of processing units comprising one or more processing units in communication with one another.

5. The tray of claim 4, wherein each of the one or more processing units are one of a CPU, GPU, DPU, QPU, or PPU.

6. The tray of claim 4 or 5, further comprising a plurality of cartridge connectors, wherein each of the plurality of groups of processing units is in communication with a respective cartridge connector of the plurality of cartridge connectors, further comprising an on-tray communication bridge configured to provide communication links between respective groups of processing units by interfacing with the plurality of cartridge connectors, wherein the on-tray communication bridge is one of a cabled communication bridge interfacing with the plurality of cartridge connectors or a printed circuit board (PCB)-based communication bridge interfacing with the plurality of cartridge connectors.

7. The tray of any of claims 4-6, wherein the plurality of groups of processing units may be selectively in communication with one another via an on-tray communication bridge configured to provide communication links between respective groups of processing units, wherein the on-tray communication bridge is configured to cause a selected one of:
each group of processing units to be a separate L1 domain,
subsets of the groups of processing units of the plurality of groups of processing units to form separate L1 domains, or
the plurality of groups of processing units to be part of a common L1 domain.

8. The tray of claim 7, wherein the on-tray communication bridge has a configurable communication topology and is configured to enable dynamic assignment of groups of the plurality of groups of processing units to the L1 domains.

9. The tray of claim 7, wherein the on-tray communication bridge has a fixed communication topology and is pluggably in communication with the plurality of groups of processing units.

10. The tray of any of claims 6-9, wherein the on-tray communication bridge is a cabled communication bridge.

11. The tray of any of claims 6-10, wherein the on-tray communication bridge is formed on a printed circuit board (PCB).

12. The tray of any of claims 6-11, wherein the on-tray communication bridge is an NVLink bridge.

13. The tray of any of claims 6-12, wherein the on-tray communication bridge is pluggably connected to the tray.

14. A datacenter comprising:
at least one tray comprising a configurable number of L1 domains, each L1 domain of the configurable number of L1 domains comprising at least one processing unit of the at least one tray.

15. The datacenter of claim 14, wherein the at least one tray comprises a plurality of processing units, wherein the plurality of processing units are in groups of processing units with one or more processing units of a group of processing units being in direct communication with one another, wherein the at least one tray comprises an on-tray communication bridge and communication between the groups of processing units is controlled by the on-tray communication bridge, wherein the on-tray communication bridge defines the configurable number of L1 domains of the at least one tray.
